(19) **Europäisches Patentamt**
**European Patent Office**
**Office européen des brevets**

(11) **EP 2 056 548 B1**

(12) **EUROPEAN PATENT SPECIFICATION**

(45) Date of publication and mention
of the grant of the patent:
**30.11.2011 Bulletin 2011/48**

(51) Int Cl.:
*H04L 25/03* (2006.01)    *H04B 3/32* (2006.01)

(21) Application number: **07291309.8**

(22) Date of filing: **30.10.2007**

(54) **Method and apparatus for signal precoding in communication systems**

Verfahren und Vorrichtung zur Vorkodierung von Kommunikationssignalen

Procédé et appareil de précodage des signaux de communication

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**06.05.2009 Bulletin 2009/19**

(73) Proprietor: **Alcatel Lucent
75008 Paris (FR)**

(72) Inventors:
• **Maes, Jochen
2431 Veerle (BE)**
• **Peeters, Michael
1742 Ternat (BE)**
• **Guenach, Maumoun
1830 Machelen (BE)**

(74) Representative: **Narmon, Gisèle Marie Thérèse et
al
Alcatel-Lucent Bell NV
Copernicuslaan 50
2018 Antwerpen (BE)**

(56) References cited:
**WO-A-2007/109630**

• **LESHEM A ET AL: "A low complexity coordinated
fext cancellation for VDSL" PROCEEDINGS OF
THE 11TH IEEE INTERNATIONAL CONFERENCE
ON ELECTRONICS, CIRCUITS AND SYSTEMS, 13
December 2004 (2004-12-13), - 15 December 2004
(2004-12-15) pages 338-341, XP010774212
PISCATAWAY, NJ, USA ISBN: 978-0-7803-8715-7**
• **LAN YANG CHEN MING ET AL: "Reduced
complexity group sphere decoder joint with
interference cancellation for multistream MIMO"
IEEE 60TH VEHICULAR TECHNOLOGY
CONFERENCE, vol. 2, 26 September 2004
(2004-09-26), - 29 September 2004 (2004-09-29)
pages 895-898, XP010788519 NJ, USA ISBN:
978-0-7803-8521-4**

**Description**

The present invention relates to a method for jointly processing a plurality of signals to be transmitted over, or received from, respective ones of a plurality of transmission (or communication) channels.

Crosstalk (or inter-channel interferences) is a major source of channel impairment for Multiple Inputs Multiple outputs (MIMO) transmission systems, such as Digital Subscriber Line (DSL) transmission systems.

As the demand for higher data rates increases, DSL systems are evolving toward higher frequency bands, wherein crosstalk between neighboring transmission lines (that is to say, transmission lines forming part of the same cable binder) is more pronounced (the higher frequency, the more coupling).

A MIMO system can be described by the following linear model:

$$\mathbf{Y}(f)=\mathbf{H}(f)\mathbf{X}(f)+\mathbf{Z}(f) \quad (1)$$

wherein the N-component complex vector X, respectively Y, denotes a discrete frequency representation of the symbols transmitted over, respectively received from, the N channels, and wherein the N-component complex vector Z denotes some additional noise present over the N channels, such as alien interferences, thermal noise and Radio Frequency Interferences (RFI), and wherein the NxN complex matrix H is referred to as the channel matrix. The (i,j)-th component of the channel matrix H describes how the communication system produces a signal on the i-th channel output in response to a symbol being transmitted to the j-th channel input. The diagonal elements of the channel matrix describe direct channel coupling(s), and the off-diagonal elements of the channel matrix describe inter-channel coupling(s).

Different strategies, referred to as Dynamic Spectrum Management (DSM), have been developed to mitigate crosstalk and to maximize effective throughput and line stability. DSM is gradually evolving from spectral management techniques (DSM level 0-2) to multi-user signal coordination (DSM level 3).

One technique for reducing inter-channel interferences is joint signal precoding (or vectoring). With precoding, signals are passed through an artificial precoding channel before being transmitted over the respective transmission channels. The precoding channel is designed so that the concatenation of the precoder and the transmission channel results in little or no interference at the receiver. Precoding can be performed within an access multiplexer or within an external pre-coding unit.

The performance of precoding depends critically on the parameters of the precoding channel, which parameters are to be computed and updated according to the actual crosstalk impairing the communication system.

A prior art method for estimating the crosstalk in e.g. the downstream direction comprises the steps of adding some base signals on top of the regular signals, measuring the signal to Noise plus Interference Ratio (SNIR) at the Customer Premise Equipment (CPE), reporting the so-measured SNIR through a feedback channel to a crosstalk estimation unit, and thereupon estimating the amplitude and phase of the crosstalk channel transfer function.

Another prior art method for estimating the crosstalk comprises the steps of measuring the slicer error at the CPE, reporting the so-measured slicer error on a per-symbol basis through a feedback channel to a crosstalk estimation unit, and thereupon estimating the amplitude and phase of the crosstalk channel transfer function.

An example of such prior art methods is described in the article: Leshem A. et al.: "A low complexity coordinated flext cancellation for VDSL", IEEE, 11th Conference on electronics, circuits and systems, Dec. 2004.

Initializing a precoder by means of either method is disadvantageous as the number of signals to be jointly processed (that is to say, the number of transmission lines forming part of the same vectoring group) increases. Indeed, the more lines, the longer for triggering, gathering and processing all the crosstalk measurements over each and every line, and thus the longer for initializing the precoding channel, the system being severely impaired by crosstalk meanwhile.

It is an object of the present invention to improve joint signal processing within a MIMO transmission system, and more specifically to reduce the precoder initialization time, e.g. after maintenance or power outage.

The objectives of the present invention are achieved and the aforementioned shortcomings of the prior art are overcome by a method for jointly processing a plurality of signals to be transmitted over, or received from, respective ones of a plurality of transmission channels by using a precoding matrix comprising a plurality of precoding coefficients, and comprising the steps provided by independent claim 1.

Examples of transmission systems impaired by crosstalk, and for which the present invention is applicable, are:

- wireline transmission systems transmitting signals over bounded transmission lines, such as DSL communication systems over bounded unshielded Twisted Pairs (UTP), the inter-channel interferences referring to the crosstalk between neighboring transmission lines,
- wireless or wireline communication systems that makes use of frequency multiplexing for sharing the available spectrum within a single transmission medium, being optical transmission systems modulating optical carriers with distinct wavelengths over an optical fiber, or wireless transmission systems modulating radio carriers with distinct frequencies over the air (possibly through multiple antennas), or multicarrier transmission systems modulating harmonic tones over a transmission line, the inter-channel interferences referring to interferences between neighboring carriers because of e.g. side-lobe rejection.

Joint signal processing refers to signal pre-coding before the signals are transmitted over the respective transmission channels so as to mitigate the coming crosstalk, or signal post-processing after the signals already impaired by crosstalk are received (also referred to as joint crosstalk cancellation). In the following, the used precoding matrix is called virtual channel matrix. The transmission channels that form part of the same vectoring group are first arranged into smaller groups (or subsets), which groups being defined so as the inter-channel interferences between transmission channels of the same group (referred to as intra-group interferences) are high with respect to inter-channel interferences between transmission channels of different groups (referred to as inter-group interferences). Interferences are quantified according to e.g. the amplitude of the crosstalk channel transfer function or any information indicative thereof. A group may contain one (i.e., no vectoring) or more transmission channels.

Group identification (also referred to as virtual binder identification) is based on off-line or on-line crosstalk measurements, and can be carried out by the precoding unit itself, or by an external unit such as a network analyzer. The outcome of the identification process is supplied to the initialization process.

Because each group contains a limited amount of lines, initialization will be at acceptable speed. Since these lines are also the strongest mutual crosstalkers, a substantial portion of the possible precoding gain is already achieved. Indeed, the crosstalk from one group to another is by definition negligible, hence most of the crosstalk will be due to interferences within this initial grouping. Furthermore, the weak crosstalkers are hard to estimate at initialization because they are masked by the strong crosstalkers.

The further part of the virtual channel matrix that is related to inter-group interferences shall preferably be set to zero so as to allow individual initialization of each and every group separately and concurrently, thereby reducing the initialization time at a further extent. As a matter of fact, the part of the virtual channel matrix that is related to interferences within one group can already be initialized and precoding can start to apply to this group while other groups are still being initialized.

In a further step, two or more groups are merged together and the missing values of the corresponding merged part of the virtual channel matrix are initialized, the groups so merging and so growing till the whole virtual channel matrix is initialized. The groups with the strongest inter-group mutual interferences can be selected as the first groups to be merged so as to achieve most of the full precoding gain as fast as possible.

It is noteworthy that the crosstalk characteristics may vary according to frequency, and so may the definition of the groups. That is to say, different channel groupings may apply over different frequency ranges so as to fit as closely as possible to those frequency-varying crosstalk characteristics, thereby achieving a further precoding gain with a still minimum initialization time.

The present invention also relates to a network unit for jointly processing a plurality of signals to be transmitted over, or received from, respective ones of a plurality of transmission channels by using a precoding matrix comprising a plurality of precoding coefficients, and comprising the units configured according to independent claim 2:

- a control unit adapted to initialize a virtual channel matrix based on interferences as measured between said plurality of transmission channels,
- a signal processing unit adapted to jointly process said plurality of signals through said virtual channel matrix.

A network unit according to the invention comprises a control unit that is further adapted to arrange said plurality of transmission channels into groups of transmission channels characterized by low inter-group interferences, and to restrict the initialization of said virtual channel matrix to intra-group interferences as measured within said respective groups of transmission channels.

Such a network unit is for instance an access multiplexer, an optical Network Unit (ONU), a wireless base station, a precoding unit, etc.

Embodiments of a network unit according to the invention correspond with the embodiments of a method according to the invention.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Finally, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The above and other objects and features of the invention will become more apparent and the invention itself will be best understood by referring to the following description of an embodiment taken in conjunction with the accompanying drawings wherein:

- fig. 1A represents a wireline communication system impaired by crosstalk,
- fig. 1B represents groups of strong mutual crosstalkers within a cable binder,
- fig. 2 represents an access multiplexer according to the invention,
- fig. 3A and 3B represent a virtual channel matrix arranged according to the invention.

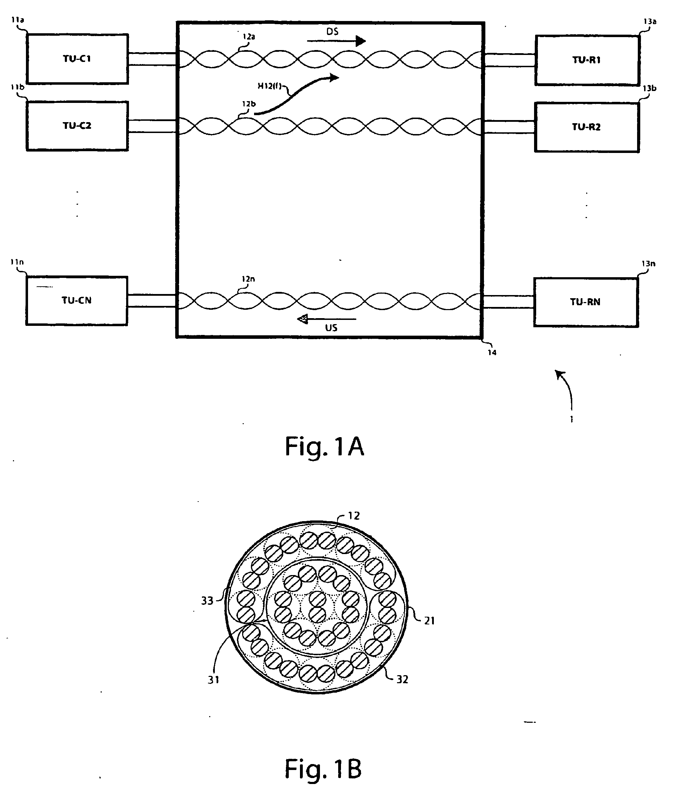

There is seen in fig. 1A an xDSL-based data communication system 1 comprising:

- N transceiver units 11 (TU_C1 to TU-CN) at a central location,
- N transceiver units 13 (TU_R1 to TU-RN) at remote locations, such as customer premises.

The transceiver units 11 form part of e.g. a Digital Subscriber Line Access Multiplexer (DSLAM), and the transceiver units 13 are e.g. CPE, such as modems, gateways or set top boxes.

The transceiver units 11a to 11n are coupled to the transceiver units 13a to 13n through UTPs 12a to 12n respectively. The downstream crosstalk channel transfer function from line j into line i is denoted as Hij(k), k being any frequency index.

There is seen in fig. 1B a cable binder 21 that is used for connecting the transceiver units 11 to the transceiver units 13, and comprising the UTPs 12.

Because pairs may be located in different binders, or because of some specific spatial layout, or because of some internal shielding, or because of some peculiar cabling process such as quad cabling wherein four copper wires are twisted altogether, the UTPs 12 within the binder 21 show different mutual crosstalk characteristics. Some UTPs have high mutual crosstalk while some others have low mutual crosstalk, high and low are to be construed with reference to e.g. some threshold or ratio vis a vis some nominal crosstalk amplitude or power, such as the averaged or maximum or minimum crosstalk amplitude or power.

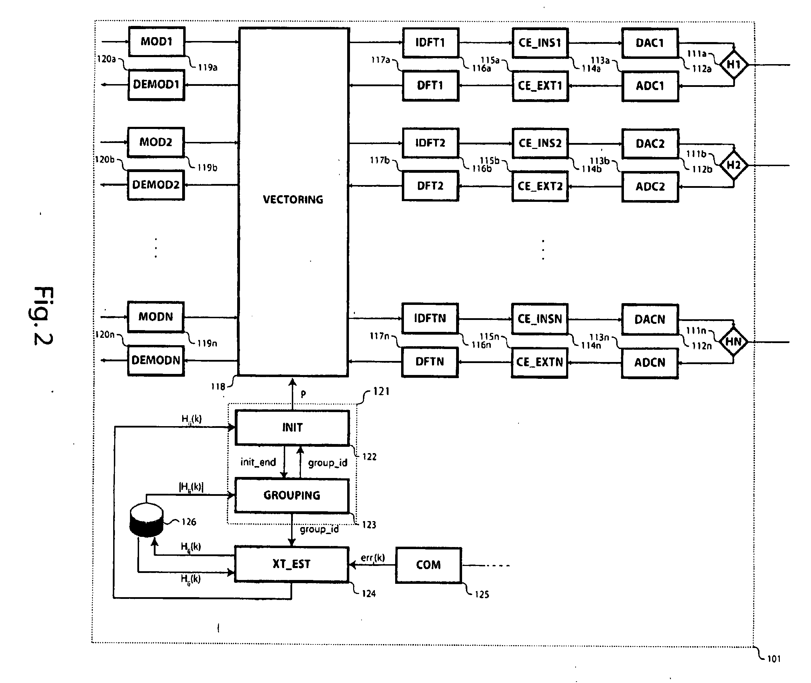

There is seen in fig. 2 a DSLAM 101 according to the invention, the most noticeable elements of which are:

- N hybrid circuits 111 (H1 to HN),
- N Digital to Analog Converters 112 (DAC1 to DACN),
- N Analog to Digital Converters 113 (ADC1 to ADCN),
- N cyclic prefix and suffix insertion units 114 (CE_INS1 to CE_INSN),
- N cyclic prefix and suffix removal units 115 (CE_EXT1 to CE_EXTN),
- N Inverse Digital Fourier Transform units 116 (IDFT1 to IDFTN),
- N Digital Fourier Transform units 117 (DFT1 to DFTN),
- a vectoring unit 118 (VECTORING),
- N carriers QAM modulators 119 (MOD1 to MODN),
- N carriers QAM demodulators 120 (DEMOD1 to DEMODN),
- a control unit 121, which unit further comprising:

  - an initialization unit 122 (INIT),
  - a grouping unit 123 (GROUPING),
  - a crosstalk estimation unit 124 (XT_EST),
  - a communication unit 125 (COM),
  - a non-volatile data repository 126.

output terminals of the hybrid circuits 111 are coupled to respective ones of input terminals of the ADC 113. Output terminals of the ADC 113 are coupled to respective ones of input terminals of the cyclic prefix and suffix extraction units 115. output terminals of the cyclic prefix and suffix extraction units 115 are coupled to respective ones of input terminals of the DFT units 117.

Output terminals of the IDFT units 116 are coupled to respective ones of input terminals of the cyclic prefix and suffix insertion units 114. Output terminals of the cyclic prefix and suffix insertion units 114 are coupled to respective ones of input terminals of the DACs 112. output terminals of the DACs 112 are coupled to respective ones of input terminals of the hybrid circuits 111.

The vectoring unit 118 is coupled to input terminals of the IDFT units 116, to output terminals of the DFT units 117, to output terminals of the QAM modulators 119 and to input terminals of the QAM demodulators 120.

The grouping unit 123 is coupled to the initialization unit 122, to the crosstalk estimation unit 124 and to the data repository 126. The initialization unit 122 is further coupled to the vectoring unit 118 and to the crosstalk estimation unit 124. The crosstalk estimation unit 124 is further coupled to the communication unit 125 and to the data repository 126.

The hybrid circuits 111 are adapted to couple the transceiver's outputs to UTPs, and UTPs to the transceiver's inputs. The hybrid circuits 111 further include a means for DC-isolating the line signal from the transceiver's circuitry, and for adapting to the line characteristic impedance.

The DACs 112 are adapted to convert a discrete time sequence into an analog signal.

The ADCs 113 are adapted to sample an incoming analog signal and to encode a sample as a binary sequence.

The cyclic prefix and suffix insertion units 114 are adapted to append cyclic prefix and suffix to the time sequences as synthesized by the IDFT units 116 so as to reduce Inter Symbol Interferences (ISI).

The cyclic prefix and suffix removal units 115 are adapted to delineate a data symbol from the received sequence, and to extract a portion thereof for further spectral decomposition by the DFT units 117.

The IDFT units 116 are adapted to synthesize a digital time sequence from its discrete frequency representation, e.g. by means of the Inverse Fast Fourier Transform (IFFT) algorithm.

The DFT units 117 are adapted to decompose a digital time sequence into discrete frequency components, e.g. by means of the Fast Fourier Transform (FFT) algorithm.

The vectoring unit 118 is adapted to perform joint signal precoding in downstream direction and joint crosstalk cancellation in the upstream direction. Yet, the coming description will mostly focus on signal precoding.

Signal precoding is achieved by jointly processing the transmitted symbols in the frequency domain so as to compensate for inter-channel interferences. The downstream channel matrix can be expressed as:

$$\mathbf{H} = \begin{bmatrix} H_{11} & H_{12} & \cdots & & H_{1n} \\ H_{21} & H_{22} & & & \vdots \\ \vdots & & & & H_{n-1n} \\ H_{n1} & \cdots & & H_{nn-1} & H_{nn} \end{bmatrix} = \begin{bmatrix} H_{11} & 0 & \cdots & & 0 \\ 0 & H_{22} & & & \vdots \\ \vdots & & & & 0 \\ 0 & \cdots & & 0 & H_{nn} \end{bmatrix} + \begin{bmatrix} 0 & H_{12} & \cdots & & H_{1n} \\ H_{21} & 0 & & & \vdots \\ \vdots & & & & H_{n-1n} \\ H_{n1} & \cdots & & H_{nn-1} & 0 \end{bmatrix}$$

$$\mathbf{H} = \mathbf{D} + \mathbf{C} = \mathbf{D}(\mathbf{I} + \mathbf{D}^{-1}\mathbf{C}) \quad (2)$$

wherein D denotes the diagonal matrix that contains the downstream direct channel transfer functions, C denotes the off-diagonal matrix that contains the downstream crosstalk channel transfer functions, and I is the identity matrix given by:

$$\mathbf{I} = \begin{bmatrix} 1 & 0 & \cdots & 0 \\ 0 & 1 & & \vdots \\ \vdots & & & 0 \\ 0 & \cdots & 0 & 1 \end{bmatrix}$$

Precoding should ideally result in a transfer function matrix that preserves the direct channel transfer functions (frequency equalization at the receive-end compensates for the direct channel attenuation and phase shift) and simultaneously zeroes all the crosstalk channel transfer functions. This is achieved by using the following precoding matrix:

$$\mathbf{P} = (\mathbf{I} + \mathbf{D}^{-1}\mathbf{C})^{-1} \simeq \mathbf{I} - \mathbf{D}^{-1}\mathbf{C} \quad (3)$$

The latter is a first order approximation that is valid if the amplitude of the crosstalk channel coefficients is small with respect to the amplitude of the direct channel coefficients, which is a rather good approximation in DSL environments.

Let us denote the relative crosstalk channel matrix as $\tilde{\mathbf{C}} \cdot \tilde{\mathbf{C}}$ is given by:

$$\tilde{C} = D^{-1}C = \begin{bmatrix} 0 & H_{12}/H_{11} & \cdots & & H_{1n}/H_{11} \\ H_{21}/H_{22} & 0 & & & \vdots \\ \vdots & & & & H_{n-1n}/H_{n-1n-1} \\ H_{n1}/H_{nn} & \cdots & H_{nn-1}/H_{nn} & & 0 \end{bmatrix} \quad (4)$$

The received signal with precoding is then given by:

$$Y' = HPX + Z = D(I + \tilde{C})(I - \tilde{C})X + Z = D(I - \tilde{C}^2)X + Z \simeq DX + Z \quad (5)$$

That is to say, with precoding, the received signals are not impaired by inter-channel interferences but only by alien noise.

The QAM modulators 119 are adapted to modulate the downstream carriers, and more specifically are adapted to determine a particular amplitude and phase of a carrier according to the binary sequence to be transmitted over that carrier (the length of which matches the carrier bit loading).

The QAM de-modulators 120 are adapted to recover a binary sequence from the amplitude and phase of a QAM-modulated carrier by selecting the closest match within a demodulation grid.

The communication unit 125 is adapted to exchange channel data with the CPEs 13 through Embedded Operation Channels (EOC) or another backchannel provisioned through the DSL communication paths. More specifically, the communication unit 125 is adapted to collect slicer errors $err_i(k)$ as measured in downstream direction by a particular CPE for a particular transmitted symbol x, i denoting the line number over which measurements are carried out.

The crosstalk coefficient estimation unit 124 is adapted to estimate both the amplitude and phase of the downstream crosstalk coefficients. The estimation is constrained to intra-group interferences, that is to say any crosstalk coefficient referring to inter-group interferences is assumed to be zero.

Downstream estimation techniques involves e.g. the slicer error $err_i(k)$ as gathered by the communication unit 125, the transmitted symbol X as synthesized by the modulators 119, and maximum-likelihood estimators or generalized decision feedback algorithms.

The last estimates of the crosstalk channel transfer function, presently $Hij(k)$, are supplied to the initialization unit 122 for computation of the corresponding precoding matrix P, and are held in the data repository 126. The so-held coefficient values can also be used as first estimates whenever the crosstalk coefficients need to be re-evaluated from scratch.

The grouping unit 123 is adapted to group the transmission lines 12 according to their mutual crosstalk amplitude, presently $|Hij(k)|$ as held in the data repository 126. The definition of the respective groups, that is to say which transmission line belongs to which group, is supplied to both the initialization unit 122 and to the crosstalk estimation unit 124 (see group_id in fig. 2).

The initialization unit 122 is adapted to compute the precoding matrix P given the downstream crosstalk channel coefficients as previously estimated. The computation is constrained to intra-group interferences, that is to say any matrix component that relates to inter-group interferences is set to zero. The so-computed precoding matrix P is supplied to the vectoring unit 118 for downstream signal precoding.

The initialization unit 122 is further adapted to notify the grouping unit 123 once the initialization of the precoding matrix P is completed and precoding with the so-computed matrix is effective (see init_end in fig. 2). Thereupon, the grouping unit 123 can start merging the groups.

An operation of this embodiment follows.

Referring back to fig. 1B, the grouping unit 123 arranges the UTPs 12 into groups according to their mutual crosstalk amplitude as held in the data repository 126, thereby yielding to the identification of for example 3 line groups 31, 32 and 33 within the binder 21. Lines that belong to group 31 have high mutual crosstalk between each other, and low mutual crosstalk with lines of group 32 or 33. Lines that belong to group 32 have high mutual crosstalk between each other, and low mutual crosstalk with lines of group 31 or 33. Lines that belong to group 33 have high mutual crosstalk between each other, and low mutual crosstalk with lines of group 31 or 32.

This grouping is supplied to both the crosstalk estimation unit 124 and the initialization unit 122.

The crosstalk estimation unit 124 estimates the crosstalk coefficients that relates to interferences within groups 11, 12 and 13. The further crosstalk coefficients are set to zero. The so-estimated crosstalk coefficients are supplied to the initialization unit 122.

The initialization unit 122 computes the precoding matrix P from the so-estimated crosstalk coefficients.

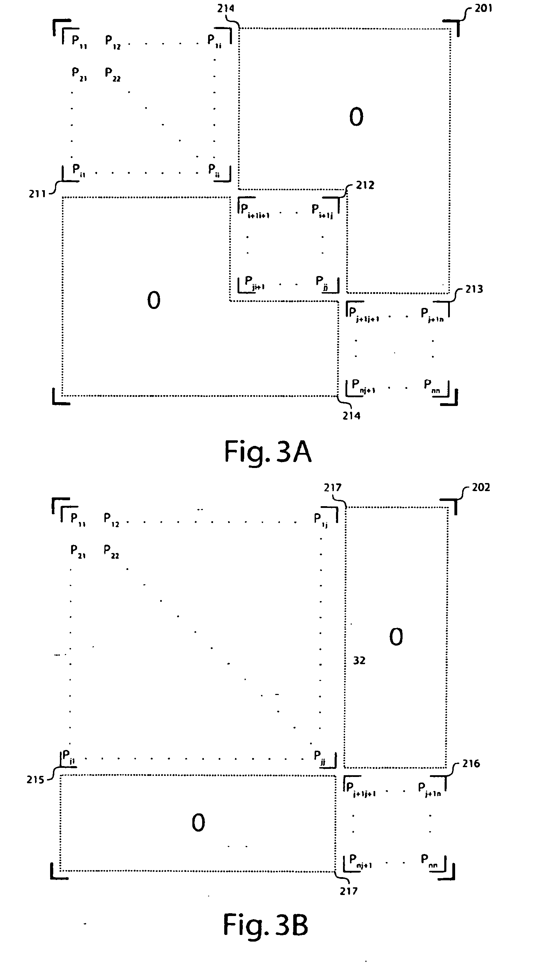

There is seen in fig. 3A a corresponding arrangement 201 of the precoding matrix P. The lines have been renumbered so as to fit the group definition and for improved readability, yet such a renumbering is not absolutely necessary.

The matrix blocks 211, 212 and 213 correspond to intra-group interferences for groups 31, 32 and 33 respectively. The part of the precoding matrix 201 that is related to inter-group interferences, presently 214, is set to zero.

This precoding matrix 201 is eventually supplied to the vectoring unit 118, thereby allowing the precoding to start in a very short time frame while achieving most of the precoding gain.

Once this first initialization is complete and precoding is effective, a trigger is sent to the grouping unit 123 to start group merging. The group merging is based on former crosstalk estimates between lines belonging to different groups, which estimates being held in the data repository 126. Typically, the grouping unit 123 selects the groups with the highest inter-group interferences as the next group to be merged. The grouping unit 123 may merge 2 or more groups all together.

As an example, the grouping unit 123 decides to merge groups 31 and 32 (this group is further referred to as 31 + 32) while group 33 is left unchanged. This new group definition is supplied to both the crosstalk estimation unit 124 and the initialization unit 122.

The crosstalk estimation unit 124 estimates the missing crosstalk coefficients, that is to say the crosstalk coefficients that relate to interferences between lines of group 31 and lines of group 32. All the lastly estimated crosstalk coefficients are supplied to the initialization unit 122.

A corresponding arrangement 202 of the precoding matrix P is shown in fig. 3B. The matrix blocks 215 and 216 correspond to intra-group interferences for groups 31 + 32 and 33 respectively. The part of the precoding matrix 201 that is related to inter-group interferences, presently 217, is set to zero.

This new precoding matrix 202 is supplied to the vectoring unit 118, thereby achieving a further precoding gain.

In a further step not shown, the group 33 is merged with the group 31 + 32. Thereafter, the precoding matrix P is fully initialized and the full precoding gain is achieved.

A similar derivation can be used for upstream joint crosstalk cancellation with an upstream channel matrix G and a cancellation matrix Q. Yet, the estimation of the upstream crosstalk coefficients is faster since the slicer error and an estimate of the upstream transmitted symbol are locally available. The invention is still worth since the algorithm for estimating the crosstalk coefficients is a computer intensive application asking for many processing resources, and thus the less crosstalk coefficients to estimate, the less components of the cancellation matrix to compute, the faster the initialization.

In an alternative embodiment of the present invention, the group definition varies according to the frequency index k, meaning different groupings may apply for different frequency indexes.

In still an alternative embodiment of the present invention, the grouping is done in a tree-like fashion without referring to a specific crosstalk threshold, i.e. initial groups of 2 lines, further merged into groups of 4 lines, further merged into groups of 8 lines, etc, till merging into a single group that matches the vectoring group and that spans over the whole channel matrix.

In still an alternative embodiment of the present invention, the initial grouping is performed in an external unit, such as a network analyzer, and the group definition is supplied to the network unit 101 via a data communication network and held in the data repository 126 for further retrieval by the initialization unit 121 and the crosstalk estimation unit 123. The network analyzer may also supply the network unit 101 with further group merging information.

The present invention may also find applications in CPE for line bonding, wherein upstream data symbols transmitted over multiple bonded lines may be jointly precoded so as to mitigate upstream crosstalk between those bonded lines.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

**Claims**

1. A method for jointly processing a plurality of signals to be transmitted over respective ones of a plurality of transmission channels (12) by using a precoding matrix comprising a plurality of precoding coefficients, and comprising the steps of:

   - estimating crosstalk coefficients between said plurality of transmission channels based on measured interferences between said plurality of transmission channels,

- computing said precoding coefficients of said precoding matrix from said estimated crosstalk coefficients,
- jointly processing said plurality of signals through said precoding matrix,

and **characterized by** the steps of:

- arranging said plurality of transmission channels into groups of transmission channels (31, 32, 33) according to the mutual crosstalk amplitude of said estimated crosstalk coefficients,
- performing said computation separately within each one of said groups of transmission channels, and setting the remaining precoding coefficients of said precoding matrix to zero.

2. A network unit (101) for jointly processing a plurality of signals to be transmitted over respective ones of a plurality of transmission channels (12)) by using a precoding matrix comprising a plurality of precoding coefficients, and comprising:

- a control unit (121) adapted to estimate crosstalk coefficients between said plurality of transmission channels based on measured interferences between said plurality of transmission channels, and to compute said precoding coefficients of said precoding matrix from said estimated crosstalk coefficients,
- a signal processing unit (118) adapted to jointly process said plurality of signals using said precoding matrix,

and **characterized in that** said control unit is further adapted to arrange said plurality of transmission channels into groups of transmission channels (31, 32, 33) according to the mutual crosstalk amplitude of said estimated crosstalk coefficients, to perform said computation separately within each one of said groups of transmission channels, and to set the remaining precoding coefficients of said precoding matrix to zero.

3. A network unit according to claim 2, wherein said network unit is an access multiplexer.

4. A network unit according to claim 2, wherein said network unit is an optical network unit.

5. A network unit according to claim 2, wherein said network unit is a wireless base station.

**Patentansprüche**

1. Verfahren zur gemeinsamen Verarbeitung einer Mehrzahl von Signalen, welche über entsprechende einer Mehrzahl von Übertragungskanälen (12) zu übertragen sind unter Verwendung einer Vorcodierungsmatrix mit einer Mehrzahl von Vorcodierungskoeffizienten, die folgenden Schritte umfassend:

- Schätzen der Übersprechkoeffizienten zwischen der besagten Mehrzahl von Übertragungskanälen auf der Basis von gemessenen Interferenzen zwischen der besagten Mehrzahl von Übertragungskanälen,
- Errechnen der besagten Vorcodierungskoeffizienten der besagten Vorkodierungsmatrix aus den besagten geschätzten Übersprechkoeffizienten,
- gemeinsames Verarbeiten der besagten Mehrzahl von Signalen durch die besagte Vorcodierungsmatrix,

und **gekennzeichnet durch** die folgenden Schritte:

- Anordnen der besagten Mehrzahl von Übertragungskanälen in Gruppen von Übertragungskanälen (31, 32, 33) gemäß der gegenseitigen Übersprechamplitude der besagten geschätzten Übersprechkoeffizienten,
- Ausführen der besagten Errechnung separat innerhalb einer jeden der besagten Gruppen von Übertragungskanälen, und Setzen der restlichen Vorcodierungskoeffizienten der besagten Vorkodierungsmatrix auf Null.

2. Netzwerkeinheit (101) für die gemeinsame Verarbeitung einer Mehrzahl von Signalen, welche über entsprechende einer Mehrzahl von Übertragungskanälen (12) zu übertragen sind unter Verwendung einer Vorcodierungsmatrix mit einer Mehrzahl von Vorcodierungskoeffizienten, umfassend:

- Eine Steuereinheit (121), ausgelegt für die Schätzung der Übersprechkoeffizienten zwischen der besagten Mehrzahl von Übertragungskanälen auf der Basis von gemessenen Interferenzen zwischen der besagten Mehrzahl von Übertragungskanälen, und für die Errechnung der besagten Vorcodierungskoeffizienten der besagten Vorcodierungsmatrix aus den besagten geschätzten Übersprechkoeffizienten,

- eine Signalverarbeitungseinheit (118), ausgelegt für die gemeinsame Verarbeitung der besagten Mehrzahl von Signalen unter Verwendung der besagten Vorcodierungsmatrix,

und **dadurch gekennzeichnet, dass**
die besagte Steuereinheit weiterhin dazu ausgelegt ist, die besagte Mehrzahl von Übertragungskanälen gemäß der gegenseitigen Übersprechamplitude der besagten geschätzten Übersprechkoeffizienten in Gruppen von Übertragungskanälen (31, 32, 33) anzuordnen, die besagte Errechnung separat innerhalb einer jeden der besagten Gruppen von Übertragungskanälen auszuführen und die restlichen Vorcodierungskoeffizienten der besagten Vorcodierungsmatrix auf Null zu setzen.

3. Netzwerkeinheit nach Anspruch 2, wobei die besagte Netzwerkeinheit ein Zugangsmultiplexer ist.

4. Netzwerkeinheit nach Anspruch 2, wobei die besagte Netzwerkeinheit eine optische Netzwerkeinheit ist.

5. Netzwerkeinheit nach Anspruch 2, wobei die besagte Netzwerkeinheit eine drahtlose Basisstation ist.


**Revendications**

1. Procédé pour un traitement commun d'une pluralité de signaux à transmettre à une pluralité de canaux de transmission (12) en utilisant une matrice de précodage comprenant une pluralité de coefficients de précodage et comprenant les étapes de :

   - estimation des coefficients de diaphonie entre ladite pluralité de canaux de transmission sur la base des interférences mesurées entre ladite pluralité de canaux de transmission,
   - calcul desdits coefficients de précodage de ladite matrice de précodage à partir desdits coefficients de diaphonie estimés,
   - traitement commun de ladite pluralité de signaux à travers ladite matrice de précodage, et **caractérisé par** les étapes de :
   - agencement de ladite pluralité de canaux de transmission en groupes de canaux de transmission (31, 32, 33) selon l'amplitude de diaphonie mutuelle desdits coefficients de diaphonie estimés,
   - réalisation dudit calcul de manière séparée dans chacun desdits groupes de canaux de transmission, et réglage des coefficients de précodage restants de ladite matrice de précodage à zéro.

2. Unité de réseau (101) pour un traitement commun d'une pluralité de signaux à transmettre à une pluralité de canaux de transmission (12) en utilisant une matrice de précodage comprenant une pluralité de coefficients de précodage et comprenant :

   - une unité de commande (121) adaptée pour estimer les coefficients de diaphonie entre ladite pluralité de canaux de transmission sur la base d'interférences mesurées entre ladite pluralité de canaux de transmission, et pour calculer lesdits coefficients de précodage de ladite matrice de précodage à partir desdits coefficients de diaphonie estimés,
   - une unité de traitement de signaux (118) adaptée pour traiter de manière commune ladite pluralité de signaux en utilisant ladite matrice de précodage, et **caractérisée en ce que** ladite unité de commande est en outre adaptée pour agencer ladite pluralité de canaux de transmission en groupes de canaux de transmission (31, 32, 33) selon l'amplitude de diaphonie mutuelle desdits coefficients de diaphonie estimés, pour effectuer ledit calcul de manière séparée dans chacun desdits groupes de canaux de transmission, et pour régler à zéro les coefficients de précodage restants de ladite matrice de précodage.

3. Unité de réseau selon la revendication 2, dans laquelle ladite unité de réseau est un multiplexeur d'accès.

4. Unité de réseau selon la revendication 2, dans laquelle ladite unité de réseau est une unité de réseau optique.

5. Unité de réseau selon la revendication 2, dans laquelle ladite unité de réseau est une station de base sans fil.

Fig. 1A

Fig. 1B

Fig. 2

Fig. 3A

Fig. 3B